# DEMANDE DE BREVET EUROPEEN

(11) **EP 0 837 031 A2**
(43) Date de publication de la demande: **22.04.1998**
(21) Numéro de dépôt: 97402428.3
(22) Date de dépôt: 14.10.1997
(51) Int. Cl.: C01B 3/50, C01B 31/18

(54) **Procédé et installation pour la séparation d'un mélange d'hydrogène et/ou d'au moins un hydrocarbure et/ou d'azote et/ou d'oxyde de carbone**

(30) Priorité: 15.10.1996 FR 9612567
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gallarda, Jean, 94340 Joinville-le-Pont (FR)
(74) Mandataire: Mercey, Fiona Susan

(57) **Abrégé**

Un gaz de synthèse constitué par un mélange d'hydrogène, et/ou au moins d'un hydrocarbure et/ou d'azote et/ou d'oxyde de carbone est séparé dans une colonne de lavage (K01), de « flash » (K02)ou de distillation (K03) contenant des garnissages structurés.

## Description

La présente invention concerne un procédé et une installation pour la séparation d'un mélange d'oxyde de carbone et/ou d'hydrogène et/ou d'au moins un hydrocarbure et/ou d'azote.

Les installations connues pour la séparation des mélanges de monoxyde de carbone et d'hydrogène comprennent uniquement des colonnes à plateaux.

Bien que l'usage des garnissages se soit banalisé pour d'autres types de distillation, telle que la distillation de l'air, le coefficient d'équilibre de l'air est sensiblement différent de celui des mélanges de d'oxyde de carbone, d'hydrogène et/ou de méthane.

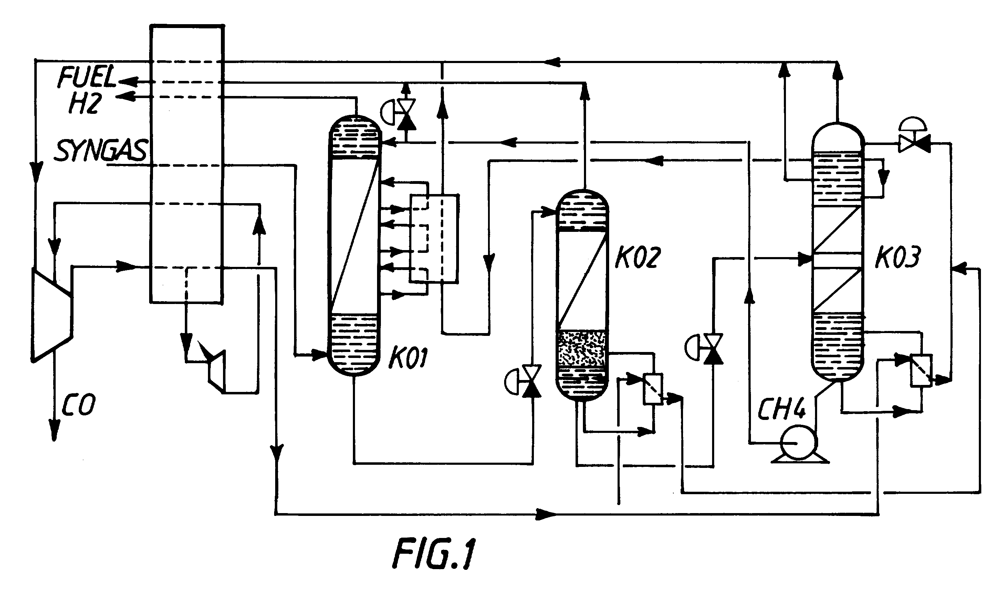

Dans les systèmes avec lavage au méthane (Figure 1), le gaz de synthèse sous pression refroidi à -180 °C, est lavé par du méthane liquide dans la colonne K01, le monoxyde de carbone est entraîné en cuve de colonne et l'hydrogène est produit en tête.

L'hydrogène dissout est alors évacué dans la colonne de flash moyenne pression K02. Le binaire CO/CH₄ est alors séparé dans la colonne à distiller basse pression K03. Le CO gazeux est produit en tête, le méthane liquide produit en cuve étant pompé et recyclé pour le lavage dans K01.

La puissance frigorifique est produite dans un cycle CO.

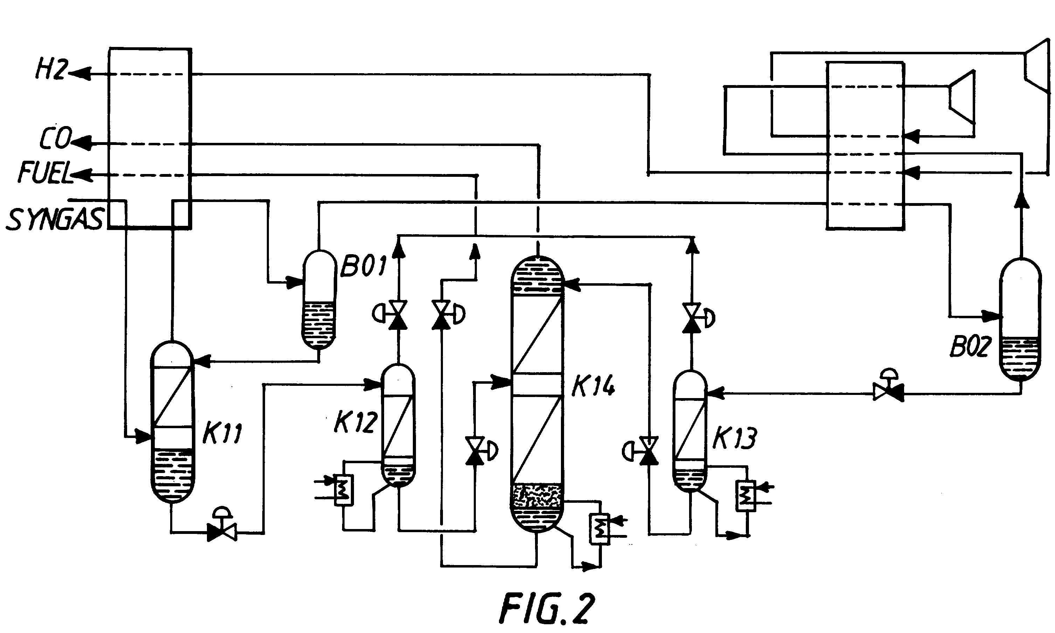

Dans les systèmes avec condensation partielle (Figure 2), le gaz de synthèse, lavé de son méthane dans K11 par du CO liquide issu de B01, est refroidi à la température la plus basse possible, la limitation étant la température de solidification du CO; le liquide condensé dans B02 est essentiellement du CO.

Les colonnes de flash K12 et K13 éliminent l'hydrogène dissout respectivement dans les liquides de cuve de K11 (riche en méthane) et du pot B02 (riche en CO).

Les liquides issus des colonnes K12 et K13 alimentent alors la colonne à distiller K14 où s'effectue la séparation CO/CH₄.

La puissance frigorifique est obtenue par détente d'hydrogène dans des turbines.

Dans le cas particulier où de l'azote est présent, une colonne de séparation N₂/CO pourra être ajoutée en aval de la colonne CO/CH₄.

Selon un objet de l'invention, il est prévu une installation de séparation d'un mélange gazeux comprenant de l'hydrogène et/ou au moins un hydrocarbure et/ou de l'azote et/ou de l'oxyde de carbone comprenant une colonne de lavage et/ou une colonne de « flash » et/ou une colonne de distillation caractérisée en ce que au moins une de ces colonnes contient des garnissages.

Les garnissages sont préférablement des garnissages structurés.

Selon un autre objet de l'invention, il est prévu un procédé pour la séparation d'un mélange gazeux comprenant de l'hydrogène et/ou au moins un hydrocarbure et/ou d'azote et/ou d'oxyde de carbone dans un système de colonnes comprenant au moins une colonne, cette colonne contenant au moins une section de garnissages.

Suivant d'autres modes de réalisation, il est prévu un procédé dans lequel les garnissages sont des garnissages structurés ayant une densité entre 400 et 1000 m²/m³.

Les garnissages peuvent donc être installés à l'intérieur des colonnes de lavage, de « flash » et de distillation.

Pour les colonnes fonctionnant à basse pression, telles que les colonnes de distillation de monoxyde de carbone et de méthane ou de monoxyde de carbone et d'azote, les pertes de charges sont relativement élevées pour des plateaux classiques.

L'usage de garnissages permet de diviser les pertes de charge par 10. Si la basse pression en sortie d'appareil est fixe, on peut donc distiller à pression plus faible et réaliser une économie d'énergie de quelques pourcents.

Les garnissages permettent de réduire la hauteur et le diamètre des colonnes de lavage et de distillation. En remplaçant les plateaux par des garnissages ayant une densité de 870 m²/m³, on peut réduire la hauteur de la colonne d'environ 20 %.

Pour les colonnes de « flash », qui ont un débit gazeux faible et très variable entre la cuve et la tête; la perforation des plateaux est donc faible et très différente d'un plateau à l'autre, rendant leur réalisation difficile.

De plus, quand on distille un mélange de H₂/CO/CH₄, les débits varient fortement à l'intérieur d'un même tronçon. Cela ne pose aucun problème avec un garnissage mais rend délicat l'usage des plateaux.

Les garnissages structurés de l'invention peuvent être du type « ondulé-croisé ».

## Revendications

1. Installation de séparation d'un mélange gazeux comprenant de l'hydrogène et/ou au moins un hydrocarbure et/ou de l'azote et/ou de l'oxyde de carbone comprenant une colonne de lavage (K01, K11) et/ou une colonne de « flash » (K02, K12, K13) et/ou une colonne de distillation (K03, K14) caractérisée en ce que au moins une de ces colonnes contient des garnissages.

2. Installation selon la revendication 1 dans laquelle les garnissages sont des garnissages structurés.

3. Installation selon la revendication 2 dans laquelle les garnissages ont une densité de 400 m²/m³ à 1000 m²/m³.

4. Procédé pour la séparation d'un mélange gazeux comprenant de l'hydrogène et/ou au moins un hydrocarbure et/ou de l'azote et/ou de l'oxyde de carbone dans un système de colonnes comprenant au moins une colonne, cette colonne contenant au moins une section de garnissages.

5. Procédé selon la revendication 4 dans lequel les garnissages sont des garnissages structurés.

6. Procédé selon la revendication 5 dans lequel les garnissages ont une densité entre 400 et 1000 m²/m³.
